# DEMANDE DE BREVET EUROPEEN

(11) **EP 1 126 736 A1**
(43) Date de publication de la demande: **22.08.2001**
(21) Numéro de dépôt: 01460010.0
(22) Date de dépôt: 14.02.2001
(51) Int. Cl.: H04Q 7/36

(54) **Procédé de répartition des communications au sein d'une cellule d'un réseau de radiocommunication, dispositif et station de base correspondants**

(30) Priorité: 16.02.2000 FR 0001926
(71) Demandeur: Mitsubishi Electric Information Technology Centre Europe, 35700 Rennes (FR)
(72) Inventeur: Jechoux, Bruno M., 35000 Rennes (FR)
(74) Mandataire: Vidon, Patrice

(57) **Abrégé**

L'invention concerne un procédé de répartition des communications établies par des terminaux de radiocommunication, au sein d'une cellule géographique d'un réseau de radiocommunication, la cellule géographique étant subdivisée en au moins deux secteurs géographiques.

Selon la présente invention, le procédé comprend une étape de modification, par rotation, de l'orientation des secteurs au sein de ladite cellule.

## Description

Le domaine de l'invention est celui des radiocommunications.

Plus précisément, l'invention concerne le problème de la saturation des cellules de radiocommunication, lié au nombre de canaux disponibles au sein de la cellule et à la puissance maximale d'émission de la station de base associée à chaque cellule du réseau.

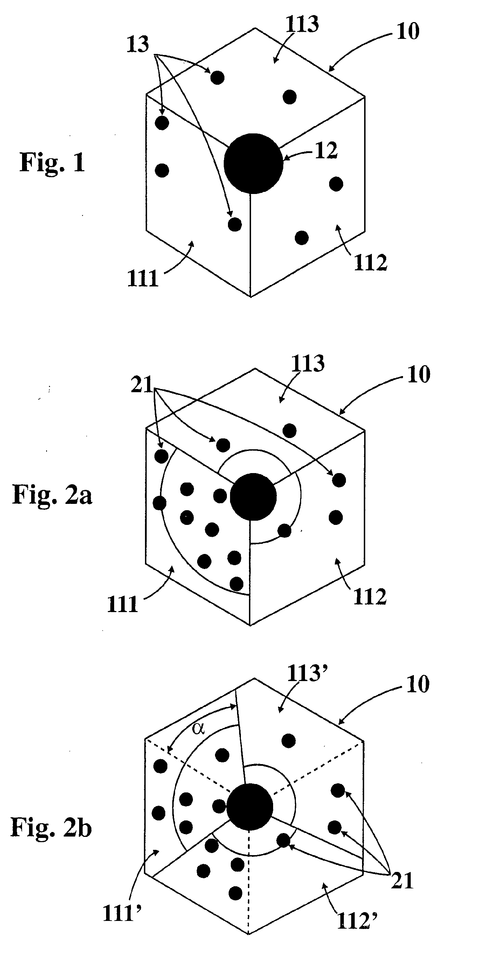

On rappelle que les réseaux de télécommunication cellulaires sont constitués d'un maillage de leur zone de couverture en zones géographiques de taille plus réduite appelées cellules. Ces cellules sont généralement elles-mêmes subdivisées en secteurs géographiques. Classiquement, comme représenté sur la figure 1, une cellule 10 est divisée en trois secteurs 111 à 113 d'ouverture angulaire sensiblement égale à 120° chacun.

Chaque cellule 10 correspond à la zone géographique couverte par une station de base 12, qui émet et/ou reçoit des signaux vers et/ou en provenance des terminaux de radiocommunication 13 présents dans la cellule.

Un problème important inhérent aux réseaux de radiocommunication est que le nombre de communications pouvant être établies, dans une cellule, entre une station de base et les différents terminaux de radiocommunication présents dans la cellule, est limité. Cette limitation est liée, d'une part, au nombre maximum de canaux disponibles dans la cellule, et d'autre part, à la puissance maximale que peut émettre la station de base.

Selon une technique connue, on attribue généralement un nombre de canaux de communication prédéterminé à chacun des secteurs d'une cellule. Un inconvénient de cette technique de l'art antérieur est que, dès lors que tous les canaux attribués à un secteur sont utilisés, toute nouvelle requête d'un terminal présent dans le secteur, et souhaitant établir une communication, est refusée.

On a envisagé d'attribuer des niveaux de priorité distincts aux terminaux de radiocommunication. De cette façon, lorsqu'un terminal de niveau de priorité élevée émet une requête d'ouverture de communication, il peut avoir accès à un canal de communication, aux dépens d'un terminal de niveau de priorité inférieure, qui est alors contraint de mettre fin à sa communication.

Un inconvénient de cette technique de l'art antérieur est donc qu'au sein d'un secteur, on ne peut satisfaire qu'un nombre restreint de requêtes d'ouverture de communication, même si des canaux de communication sont disponibles dans d'autres secteurs de la cellule.

Par ailleurs, le nombre de communications que l'on peut établir dans une cellule est aussi limité par la puissance maximale que la station de base peut émettre, en raison d'un phénomène d'interférences.

On distingue couramment deux sources d'interférences.

D'une part, les signaux émis, dans un secteur, par les terminaux de radiocommunication ou par la station de base, se propagent partiellement dans les secteurs adjacents, appartenant à la cellule considérée, ou à une cellule voisine. Dans un secteur donné, des signaux perturbateurs provenant de secteurs adjacents viennent donc s'ajouter aux signaux utiles, sous forme d'interférences inter-secteurs.

D'autre part, au sein d'un secteur donné, un terminal de radiocommunication représente une source d'interférences potentielle pour les terminaux voisins, car les signaux destinés à un terminal particulier sont également reçus par tous les terminaux voisins, et constituent ainsi une interférence intra-secteur.

Il apparaît donc clairement que, plus le nombre de terminaux en communication dans une cellule est élevé, et plus les phénomènes d'interférences inter-secteurs et intra-secteur sont importants. Or, pour compenser ces phénomènes d'interférences, et maintenir un bon rapport signal à bruit pour toutes les communications de la cellule, il est nécessaire d'accroître la puissance d'émission de la station de base de la cellule considérée. Lorsque les interférences sont trop importantes, ce qui est notamment fréquent dans le cas du CDMA (en anglais « Code Division Multiple Access », c'est-à-dire l'accès multiple par code de répartition), la puissance d'émission requise, au niveau de la station de base, pour obtenir un rapport signal à bruit suffisant en réception peut devenir trop importante, et donc entraîner la saturation de la station de base.

Un autre inconvénient des techniques de l'art antérieur est donc qu'en raison d'un phénomène d'interférences, le nombre de communications pouvant être établies au sein d'un secteur est limité, même si des canaux de communication restent disponibles dans le secteur.

L'invention a notamment pour objectif de pallier ces inconvénients de l'art antérieur.

Plus précisément, un objectif de l'invention est de fournir une cellule de radiocommunication dans laquelle les communications soient réparties de manière plus homogène entre les différents secteurs.

Un autre objectif de l'invention est de mettre en oeuvre un procédé de répartition des communications au sein d'une cellule de radiocommunication qui soit simple et peu coûteux.

Encore un autre objectif de l'invention est de permettre de satisfaire un plus grand nombre de requêtes d'ouverture de communication au sein d'une cellule.

L'invention a encore pour objectif de fournir une cellule de radiocommunication au sein de laquelle la puissance totale rayonnée par la station de base soit émise de manière plus homogène dans tous les secteurs de la cellule.

Encore un autre objectif de l'invention est de mettre en oeuvre une cellule de radiocommunication au sein de laquelle les communications soient d'une qualité accrue, et notamment au sein de laquelle les effets des interférences soient réduits.

Encore un autre objectif de l'invention est de permettre une meilleure répartition des communications au sein d'une cellule de radiocommunication, sans avoir à modifier les paramètres ou la structure des terminaux de radiocommunication du réseau.

Ces objectifs, ainsi que d'autres qui apparaîtront par la suite sont atteints selon l'invention, à l'aide d'un procédé de répartition des communications établies par des terminaux de radiocommunication, au sein d'une cellule géographique d'un réseau de radiocommunication, la cellule géographique étant subdivisée en au moins deux secteurs géographiques, comprenant une étape de modification, par rotation, de l'orientation des secteurs au sein de la cellule.

Ainsi, l'invention repose sur une approche tout à fait nouvelle et inventive de la gestion d'une cellule géographique d'un réseau de radiocommunication.

En effet, l'invention repose notamment sur une définition dynamique des secteurs d'une cellule de radiocommunication, couvrant une zone géographique évolutive, en fonction du nombre de communications établies au sein des secteurs de la cellule. On peut ainsi avantageusement déplacer, par simple rotation, les frontières des différents secteurs d'une cellule, de manière à obtenir une répartition plus homogène du nombre de terminaux en communication dans chacun des secteurs.

L'invention s'applique avantageusement à tous les types de réseaux de radiocommunication, et notamment à ceux aux standards GSM (Groupe Spécial Mobile), UMTS (en anglais « Universal Mobile Telecommunication System ») et CDMA (en anglais « Code Division Multiple Access »).

Avantageusement, l'étape de modification est mise en oeuvre selon au moins l'une des techniques appartenant au groupe comprenant :
- la rotation mécanique d'antennes d'émission et/ou de réception, chacune des antennes étant associées à l'un des secteurs de la cellule ;
- la reconfiguration d'au moins un réseau d'antennes intelligentes à formation de faisceaux, chacun des faisceaux étant associé à l'un des secteurs de la cellule.

On peut, en effet, effectuer la modification de l'orientation des secteurs de la cellule par rotation mécanique d'un jeu d'antennes d'émission et/ou de réception. Chaque antenne étant associée à l'un des secteurs de la cellule, la rotation d'une antenne donnée entraîne la modification de la zone géographique à laquelle le secteur correspondant est associé.

On peut aussi mettre en oeuvre la reconfiguration d'un réseau d'antennes intelligentes à formation de faisceaux (en anglais « smart antennas »), dans le cas où cette technologie est utilisée par l'opérateur du réseau de radiocommunication. Chaque faisceau de l'antenne étant associé à un secteur de la cellule, il apparaît clairement que la modification de l'orientation d'un faisceau entraîne la modification de l'orientation du secteur associé.

Selon une technique avantageuse de l'invention, l'étape de modification est mise en oeuvre si au moins un critère de commande de la rotation est satisfait.

Ainsi, lorsqu'il est souhaitable de procéder à une modification de l'orientation des secteurs, afin, par exemple, de répartir de manière plus homogène les communications au sein de la cellule, un critère correspondant est satisfait et commande la mise en oeuvre de l'étape de modification.

Avantageusement, ledit au moins un critère de commande de la rotation appartient au groupe comprenant :
- le débit global de l'un au moins des secteurs est supérieur à un débit global prédéterminé ;
- le nombre de liens établis dans l'un au moins des secteurs est supérieur à un nombre de liens prédéterminé.

Ces deux critères sont en effet liés aux deux facteurs limitant le nombre de communications pouvant être établies, dans une cellule, entre une station de base et les différents terminaux de radiocommunication présents dans la cellule, à savoir le nombre maximum de canaux disponibles dans la cellule, et la puissance maximale que peut émettre la station de base.

Selon une caractéristique avantageuse de l'invention, l'étape de modification n'est mise en oeuvre que si au moins l'une des conditions suivantes est vérifiée :
- le débit global d'au moins l'un des secteurs est inférieur au débit global prédéterminé ;
- le nombre de liens établis dans au moins l'un des secteurs est inférieur au nombre de liens prédéterminé.

En effet, si tous les secteurs d'une cellule sont saturés, c'est-à-dire si tous les canaux de communication de chacun des secteurs de la cellule sont utilisés, et/ou si le débit global de chacun des secteurs est supérieur ou égal au débit global maximum autorisé, il apparaît clairement que la mise en oeuvre de l'étape de modification est inutile. Dans un tel cas de saturation, la rotation des secteurs de la cellule ne permettrait pas d'obtenir une répartition plus homogène des communications au sein de la cellule.

Selon une technique avantageuse, le procédé selon l'invention comprend les étapes successives suivantes :
- étape A : détection du ou des secteur(s) de ladite cellule pour le(s)quel(s) au moins un critère de commande est satisfait ;
- étape B : sélection, parmi le(s) secteur(s) détecté(s), d'un secteur selon une première stratégie prédéterminée ;
- étape C : détermination d'un secteur, parmi les secteurs adjacents audit secteur sélectionné, selon une deuxième stratégie prédéterminée ;
- étape D : modification, par rotation, de l'orientation des secteurs de la cellule d'un pas angulaire prédéterminé, dudit secteur sélectionné vers ledit secteur adjacent déterminé, de manière à créer de nouveaux secteurs au sein de ladite cellule ;
- étape E : détection du ou des nouveau(x) secteur(s) de ladite cellule pour le(s)quel(s) au moins un critère de poursuite relatif audit secteur sélectionné est satisfait ;
- étape F : si aucun nouveau secteur n'est détecté au cours de l'étape E, réitération de l'étape D ; sinon, une nouvelle position des secteurs de ladite cellule est établie.

Ainsi, une première étape A permet de détecter le(s) secteur(s) saturé(s) de la cellule. Une deuxième étape B consiste à choisir, parmi les secteurs détectés, le secteur qui sera principalement déchargé (c'est-à-dire, dont la charge en communications sera allégée, grâce à la mise en oeuvre de la rotation des secteurs). Une étape C permet ensuite de sélectionner l'un des secteurs adjacents au secteur choisi lors de l'étape B, vers lequel sera partiellement reportée la charge du secteur choisi, au cours de l'étape D de modification de l'orientation des secteurs de la cellule. Les étapes E et F consistent ensuite à déterminer, selon un critère de poursuite prédéterminé, s'il est nécessaire ou non de réitérer l'étape D de modification.

Selon une variante avantageuse de l'invention, la première stratégie prédéterminée consiste à sélectionner le secteur pour lequel le débit global et/ou le nombre de liens établis est le plus élevé, la deuxième stratégie prédéterminée consiste à déterminer le secteur adjacent au secteur sélectionné pour lequel le débit global et/ou le nombre de liens établis est le moins élevé, et ledit au moins un critère de poursuite relatif au secteur sélectionné appartient au groupe comprenant :
- le débit global du secteur détecté est supérieur ou égal au débit global du secteur sélectionné ;
- le nombre de liens établis dans le secteur détecté est supérieur ou égal au nombre de liens établis dans le secteur sélectionné.

Ainsi, on choisit, au cours de l'étape B (respectivement au cours de l'étape C), le secteur le plus chargé (respectivement le secteur adjacent le moins chargé) en termes de débit global et/ou de nombre de liens établis. Si, après l'étape de modification, il existe au moins l'un des nouveaux secteurs de la cellule dont la charge, en termes de débit et/ou de nombre de liens, est supérieure ou égale à la charge du secteur choisi au cours de l'étape B, une nouvelle position est alors établie, et il n'est pas nécessaire de réitérer l'étape de modification.

Selon une caractéristique avantageuse de l'invention, la cellule étant subdivisée en trois secteurs, l'étape de modification n'est pas mise en oeuvre si deux secteurs ont un débit global et/ou un nombre de liens établis identique(s), le débit global et/ou le nombre de liens établis étant respectivement supérieurs au débit global prédéterminé et/ou au nombre de liens prédéterminé.

Il apparaît en effet clairement que, dans le cas où deux secteurs d'une cellule en comptant trois ont un même niveau de saturation en termes de débit global et/ou de nombre de liens établis, la mise en oeuvre d'une étape de modification ne permet pas de répartir de manière plus homogène le nombre de communications au sein de la cellule.

Avantageusement, au cours de l'étape de modification, la vitesse de rotation des secteurs est adaptée au temps de réalisation d'un transfert de communication d'un secteur à un autre.

Ainsi, un terminal qui se trouverait sensiblement à la frontière entre deux secteurs avant l'étape de modification, et qui serait donc contraint de basculer d'un premier à un second secteur, en raison du changement d'orientation des secteurs, a avantageusement le temps de réaliser un transfert de communication du premier vers le second secteur. Une telle caractéristique réduit ainsi le risque d'interruption accidentelle de communication au cours de l'étape de modification.

L'invention concerne également un dispositif de répartition des communications établies par des terminaux de radiocommunication, au sein d'une cellule d'un réseau de radiocommunication, mettant en oeuvre des moyens de modification, par rotation, de l'orientation des secteurs de la cellule.

L'invention concerne encore une station de base d'une cellule d'un réseau de radiocommunication, mettant en oeuvre un procédé de répartition des communications tel que précité et/ou comprenant un dispositif tel que précité.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 illustre une cellule d'un réseau de radiocommunication, subdivisée en trois secteurs d'ouverture angulaire égale à 120° ;
- les figures 2a et 2b présentent la mise en oeuvre de la rotation de secteurs géographiques, dans une cellule de radiocommunication similaire à celle de la figure 1, de manière à obtenir une répartition plus homogène des communications au sein de la cellule ;
- la figure 3 illustre un dispositif de radiocommunication permettant de modifier, par rotation, l'orientation des secteurs d'une cellule selon la figure 1 ;
- les figures 4a et 4b présentent un synoptique général de l'invention, sous la forme d'une succession d'étapes mise en oeuvre dans deux modes de réalisation possibles de l'invention.

Le principe général de l'invention repose sur la modification, par rotation, de l'orientation des secteurs d'une cellule de radiocommunication.

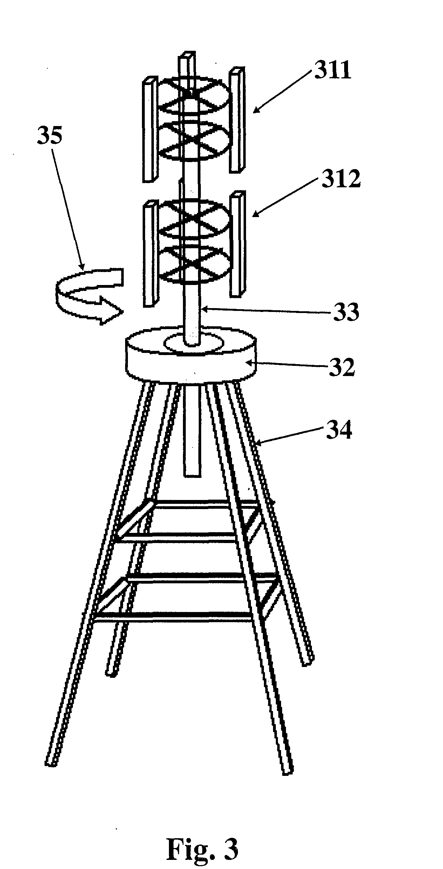

On présente, en relation avec la figure 3, un mode de réalisation d'un dispositif permettant de modifier, par rotation, l'orientation des secteurs d'une cellule géographique d'un réseau de radiocommunication.

Le dispositif comprend une partie fixe 32, solidaire d'un support 34, et une partie mobile 33, pouvant pivoter par rapport à l'élément fixe 32 selon la direction de la flèche 35. Dans cet exemple, un jeu de trois antennes d'émission 311, et un jeu de trois antennes de réception 312 sont fixés à la partie mobile 33. Chacune de ces six antennes 311 et 312 est donc une antenne d'émission ou de réception pour un des trois secteurs de la cellule de radiocommunication. Il est clair cependant, que l'invention peut n'être mise en oeuvre qu'à la réception ou à l'émission. Ainsi, lorsque l'on souhaite modifier l'orientation des secteurs géographiques d'une cellule, on fait tourner l'élément 33 d'un angle prédéterminé selon la direction de la flèche 35, de manière à faire pivoter les deux jeux d'antennes 31. Chaque antenne 31 couvre alors un nouveau secteur angulaire, qui permet de définir un nouveau secteur géographique de la cellule.

Un tel dispositif permet de mettre en oeuvre la modification de l'orientation des secteurs d'une cellule géographique par rotation mécanique d'antennes d'émission et/ou de réception associées à la cellule considérée. Un autre mode de réalisation (non représenté) peut consister, par exemple, à reconfigurer un réseau d'antennes intelligentes à formation de faisceaux (en anglais, « smart antennas »). Dans ce cas, chaque faisceau couvre un secteur en émission ou en réception.

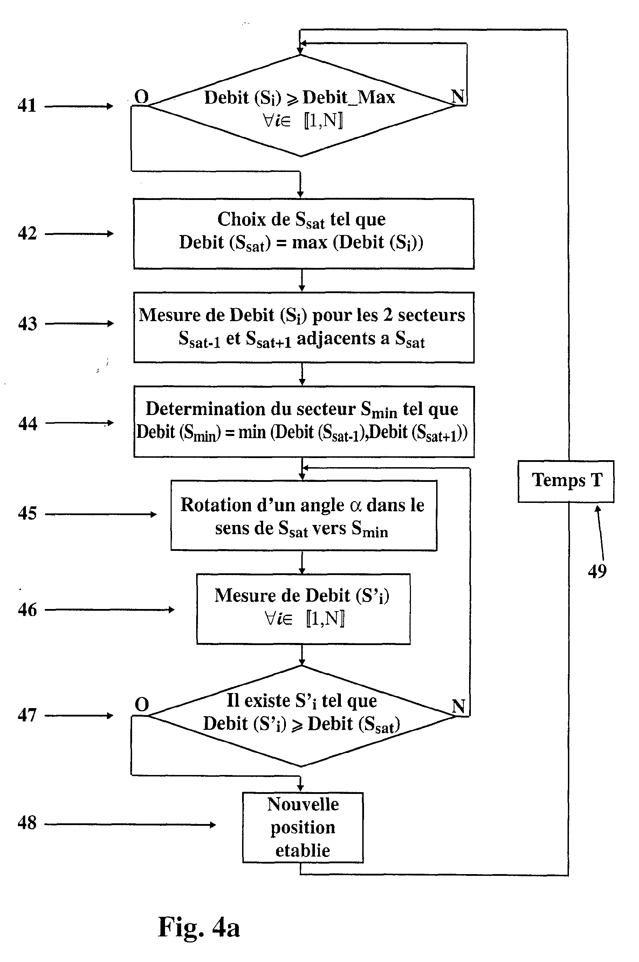

On présente désormais, en relation avec la figure 4a, la succession d'étapes mise en oeuvre dans un mode de réalisation particulier de l'invention. On considère une cellule géographique, divisée en N secteurs numérotés S₁ à S_{N}. Dans ce premier mode de réalisation possible de l'invention, la rotation des secteurs de la cellule est mise en oeuvre si l'un des secteurs satisfait un critère de débit global prédéterminé. En effet, la notion de débit global d'un secteur, et donc de puissance maximale émise par la station de base associée à la cellule, est directement liée au phénomène d'interférences évoqué précédemment.

Au cours d'une première étape 41, un dispositif, qui peut être par exemple la station de base associée à la cellule, calcule le débit global Débit(S₁) associé à chacun des secteurs S₁ à S_{N} de la cellule, et compare la valeur Débit(S₁) à une valeur Débit_Max prédéterminée. La valeur Débit_Max correspond à un débit maximum autorisé pour un secteur donné. Cette valeur est par exemple imposée par l'opérateur du réseau de radiocommunication considéré. Dans le cas des réseaux de radiocommunication au standard UMTS (en anglais « Universal Mobile Telecommunication System »), le débit global maximum sur une porteuse est, par exemple, sensiblement égal à 2 Mbits/s.

Si aucun secteur S₁ de la cellule n'a un débit global supérieur ou égal à Débit_Max, on réitère l'étape 41.

Dans le cas contraire, au cours d'une étape 42, on choisit parmi les secteurs détectés au cours de l'étape 41, le secteur Sₛₐₜ ayant le débit global le plus élevé.

Dans une étape 43, on mesure le débit global Débit(S₁) des deux secteurs Sₛₐₜ₋₁ et Sₛₐₜ₊₁ adjacents au secteur Sₛₐₜ.

L'étape 44 permet de déterminer, parmi les deux secteurs Sₛₐₜ₋₁ et Sₛₐₜ₊₁ adjacents à Sₛₐₜ, le secteur Sₘᵢₙ ayant le débit global le moins élevé (Sₘᵢₙ est tel que Débit(Sₘᵢₙ)=min(Débit(Sₛₐₜ₋₁), Débit(Sₛₐₜ₊₁)).

Au cours de l'étape 45, on met alors en oeuvre la rotation des secteurs de la cellule. Le pas angulaire de la rotation est un angle α prédéterminé, par exemple fixé par l'opérateur du réseau de radiocommunication considéré. Dans ce mode de réalisation de l'invention, la rotation se fait dans le sens du secteur Sₛₐₜ vers le secteur Sₘᵢₙ. Après rotation, on obtient donc une nouvelle subdivision de la cellule en N secteurs notés S'₁ à S'_{N}.

L'étape 46 consiste ensuite à mesurer le débit global Débit(S'₁) pour chacun des nouveaux secteurs S'₁ à S'_{N} de la cellule.

Au cours d'une étape 47, on détermine ensuite s'il existe un secteur S'₁ ayant un débit global supérieur ou égal au débit du secteur Sₛₐₜ. Si aucun secteur S'₁ parmi les secteurs S'₁ à S'_{N} ne vérifie la relation Débit(S'₁)≥Débit(Sₛₐₜ), on réitère alors l'étape 45.

Si, en revanche, l'un au moins des nouveaux secteurs S'₁ a un débit global supérieur ou égal au débit du secteur Sₛₐₜ, une nouvelle position des secteurs de la cellule est alors établie au cours d'une étape 48.

En effet, ceci signifie que les communications établies dans la cellule ont alors été redistribuées de manière plus homogène entre les différents secteurs, comme l'illustrent les figures 2a et 2b.

Sur la figure 2a, une cellule géographique 10 est divisée en trois secteurs 111 à 113 d'une ouverture angulaire de 120°. On a, par exemple, neuf communications 21 établies dans un premier secteur 111, trois communications 21 établies dans un deuxième secteur 112, et deux communications 21 établies dans le troisième secteur 113. La mise en oeuvre du premier mode de réalisation décrit ci-dessus permet avantageusement de modifier l'orientation des secteurs 111 à 113 par rotation d'un angle α, ainsi qu'illustré par la figure 2b, de manière à regrouper six communications 21 dans un premier secteur 111', cinq communications 21 dans un deuxième secteur 112', et trois communications 21 dans le troisième secteur 113'.

Selon le premier mode de réalisation présenté en relation avec la figure 4a, on réitère ensuite l'étape 41 du procédé après une durée T, fixée par exemple par l'opérateur du réseau de radiocommunication, et introduite au cours d'une étape de temporisation 49.

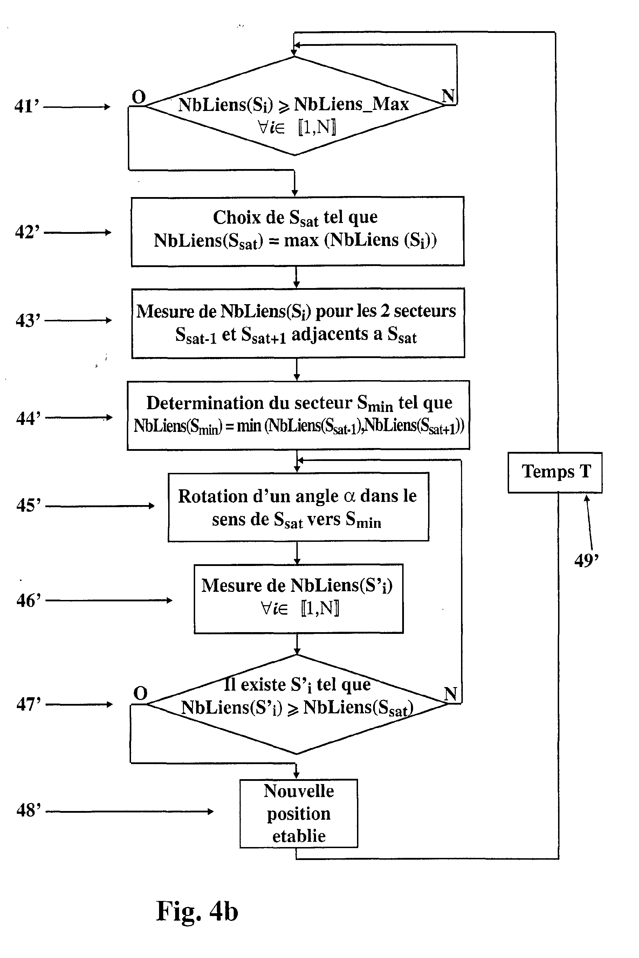

On présente désormais, en relation avec la figure 4b, la succession d'étapes mise en oeuvre dans un deuxième mode de réalisation de l'invention. On considère à nouveau une cellule géographique, divisée en N secteurs numérotés S₁ à S_{N}. Dans ce deuxième mode de réalisation possible de l'invention, la rotation des secteurs de la cellule est mise en oeuvre si l'un des secteurs satisfait un critère prédéterminé, relatif cette fois au nombre de liens établis dans ce secteur. Par lien établi, on entend ici l'utilisation d'un canal de communication par un terminal présent dans le secteur. En effet, le nombre de canaux disponibles, et donc le nombre de liens établis dans un secteur par des terminaux de radiocommunication, est un facteur limitatif du nombre maximum de communications pouvant être simultanément mises en oeuvre dans un secteur donné.

La succession d'étapes mises en oeuvre dans ce deuxième mode de réalisation est similaire à la succession d'étapes mises en oeuvre dans le premier mode de réalisation illustré par la figure 4a, le critère de débit global Débit étant systématiquement remplacé par un critère relatif au nombre de liens établis dans un secteur de la cellule, noté NbLiens.

Dans le second mode de réalisation particulier décrit ci-dessus, on peut ajouter une étape supplémentaire 41'_{bis} entre les étapes 41' et 42', au cours de laquelle on vérifie qu'il existe au moins un secteur S₁ de la cellule pour lequel le nombre de liens établis est inférieur au nombre NbLiens_Max de canaux de communication disponibles dans le secteur. Si un tel secteur existe, on poursuit alors le procédé en passant à l'étape 42'. Dans le cas contraire, on réitère l'étape 41'_{bis}, jusqu'à ce que l'un au moins des secteurs de la cellule se décharge partiellement, c'est-à-dire jusqu'à ce qu'au moins un canal de communication se libère pour l'un au moins des secteurs de la cellule.

De la même façon, on peut envisager une nouvelle étape 41_{bis} entre les étapes 41 et 42 du premier mode de réalisation décrit en relation avec la figure 4a, au cours de laquelle on vérifie qu'il existe au moins un secteur S₁ de la cellule pour lequel le débit global est inférieur au débit global maximum autorisé Débit_Max. Si un tel secteur existe, on poursuit alors le procédé en passant à l'étape 42. Dans le cas contraire, on réitère l'étape 41_{bis}, jusqu'à ce que l'un au moins des secteurs de la cellule se décharge partiellement, c'est-à-dire jusqu'à ce que le débit global de l'un au moins des secteurs de la cellule devienne inférieur à la valeur Débit_Max.

Dans le cas classique où les cellules géographiques d'un réseau de radiocommunication sont subdivisées en trois secteurs d'ouverture angulaire égale à 120° (figure 1), on peut également mettre en oeuvre une étape supplémentaire 41ₜₑᵣ (et/ou 41'ₜₑᵣ) entre les étapes 41 et 42 (mode de réalisation n°1) et/ou entre les étapes 41' et 42' (mode de réalisation n°2). Au cours de cette étape supplémentaire, on vérifie qu'il n'existe pas deux secteurs sélectionnés pendant l'étape 41 (et/ou 41') ayant le même niveau d'encombrement, c'est-à-dire ayant un débit global identique (et/ou ayant établi un nombre de liens identique).

On peut bien sûr envisager une variante de réalisation de l'invention dans laquelle les étapes 41_{bis} et 41ₜₑᵣ (respectivement 41'_{bis} et 41'ₜₑᵣ) sont toutes deux mises en oeuvre entre les étapes 41 et 42 (respectivement 41' et 42'). On peut également envisager une variante de réalisation de l'invention dans laquelle l'étape 41_{bis} (respectivement 41'_{bis}) seule est mise en oeuvre entre les étapes 41 et 42 (respectivement 41' et 42'), et une variante de réalisation dans laquelle l'étape 41ₜₑᵣ (respectivement 41'ₜₑᵣ) seule est mise en oeuvre entre les étapes 41 et 42 (respectivement 41' et 42').

Une autre variante de réalisation de l'invention peut consister à combiner les deux modes de réalisation décrits précédemment à l'aide des figures 4a et 4b, c'est-à-dire à prendre simultanément en compte deux critères de commande de la rotation des secteurs, à savoir un critère de débit global et un critère relatif au nombre de liens établis dans un secteur. Plus généralement, d'autres critères peuvent être pris en compte, pour affiner le traitement.

On peut alors envisager une succession d'étapes similaire à celle des deux modes de réalisation décrits précédemment, le passage d'une étape à une étape suivante étant déterminé d'une part, en fonction du débit global d'un secteur, et d'autre part, en fonction du nombre de liens établis dans ce secteur. On peut également imaginer de pondérer les critères de commande de la rotation, en fonction de l'importance relative que l'on souhaite accorder au débit global d'une part, et au nombre de liens établis d'autre part.

## Revendications

1. Procédé de répartition des communications établies par des terminaux de radiocommunication (13), au sein d'une cellule géographique (10) d'un réseau de radiocommunication, ladite cellule géographique étant subdivisée en au moins deux secteurs géographiques (111, 112, 113 ; 111', 112', 113'),
caractérisé en ce qu'il comprend une étape de modification (45 ; 45'), par rotation, de l'orientation des secteurs au sein de ladite cellule.

2. Procédé selon la revendication 1, caractérisé en ce que ladite étape de modification est mise en oeuvre selon au moins l'une des techniques appartenant au groupe comprenant :
- la rotation mécanique d'antennes d'émission et/ou de réception (311, 312), chacune desdites antennes étant associées à l'un desdits secteurs de ladite cellule ;
- la reconfiguration d'au moins un réseau d'antennes intelligentes à formation de faisceaux, chacun desdits faisceaux étant associé à l'un desdits secteurs de ladite cellule.

3. Procédé selon l'une quelconque des revendications 1 et 2, caractérisé en ce que ladite étape de modification est mise en oeuvre si au moins un critère de commande de ladite rotation est satisfait.

4. Procédé selon la revendication 3, caractérisé en ce que ledit au moins un critère de commande de ladite rotation appartient au groupe comprenant :
- le débit global de l'un au moins desdits secteurs est supérieur à un débit global prédéterminé ;
- le nombre de liens établis dans l'un au moins desdits secteurs est supérieur à un nombre de liens prédéterminé.

5. Procédé selon la revendication 4, caractérisé en ce que ladite étape de modification n'est mise en oeuvre que si au moins l'une des conditions suivantes est vérifiée :
- le débit global d'au moins l'un desdits secteurs est inférieur audit débit global prédéterminé ;
- le nombre de liens établis dans au moins l'un desdits secteurs est inférieur audit nombre de liens prédéterminé.

6. Procédé selon l'une quelconque des revendications 1 à 5, caractérisé en ce qu'il comprend les étapes successives suivantes :
- étape A : détection du ou des secteur(s) de ladite cellule pour le(s)quel(s) au moins un critère de commande est satisfait ;
- étape B : sélection, parmi le(s) secteur(s) détecté(s), d'un secteur selon une première stratégie prédéterminée ;
- étape C : détermination d'un secteur, parmi les secteurs adjacents audit secteur sélectionné, selon une deuxième stratégie prédéterminée ;
- étape D (45 ; 45') : modification, par rotation, de l'orientation des secteurs de la cellule d'un pas angulaire prédéterminé, dudit secteur sélectionné vers ledit secteur adjacent déterminé, de manière à créer de nouveaux secteurs au sein de ladite cellule ;
- étape E : détection du ou des nouveau(x) secteur(s) de ladite cellule pour le(s)quel(s) au moins un critère de poursuite relatif audit secteur sélectionné est satisfait ;
- étape F : si aucun nouveau secteur n'est détecté au cours de l'étape E, réitération de l'étape D ; sinon, une nouvelle position des secteurs de ladite cellule est établie (48 ; 48').

7. Procédé selon la revendication 6, caractérisé en ce que ladite première stratégie prédéterminée consiste à sélectionner le secteur pour lequel le débit global et/ou le nombre de liens établis est le plus élevé (42 ; 42'),
en ce que ladite deuxième stratégie prédéterminée consiste à déterminer le secteur adjacent audit secteur sélectionné pour lequel le débit global et/ou le nombre de liens établis est le moins élevé (44 ; 44'),
et en ce que ledit au moins un critère de poursuite relatif audit secteur sélectionné appartient au groupe comprenant :
- le débit global dudit secteur détecté est supérieur ou égal au débit global dudit secteur sélectionné ;
- le nombre de liens établis dans ledit secteur détecté est supérieur ou égal au nombre de liens établis dans ledit secteur sélectionné.

8. Procédé selon l'une quelconque des revendications 4 à 7, caractérisé en ce que, ladite cellule étant subdivisée en trois secteurs, ladite étape de modification n'est pas mise en oeuvre si deux secteurs ont un débit global et/ou un nombre de liens établis identique(s), ledit débit global et/ou ledit nombre de liens établis étant respectivement supérieurs audit débit global prédéterminé et/ou audit nombre de liens prédéterminé.

9. Procédé selon l'une quelconque des revendications 1 à 8, caractérisé en ce qu'au cours de ladite étape de modification, la vitesse de rotation desdits secteurs est adaptée au temps de réalisation d'un transfert de communication d'un secteur à un autre.

10. Dispositif de répartition des communications établies par des terminaux de radiocommunication, au sein d'une cellule d'un réseau de radiocommunication, caractérisé en ce qu'il met en oeuvre des moyens de modification, par rotation, de l'orientation des secteurs de ladite cellule.

11. Station de base (12) d'une cellule d'un réseau de radiocommunication, caractérisée en ce qu'elle met en oeuvre un procédé de répartition des communications selon l'une quelconque des revendications 1 à 9 et/ou en ce qu'elle comprend un dispositif selon la revendication 10.
